# EUROPEAN PATENT SPECIFICATION

(11) **EP 0 765 287 B1**
(45) Date of publication and mention of the grant of the patent: **25.11.1998**
(21) Application number: 95923645.6
(22) Date of filing: 21.06.1995
(51) Int. Cl.: B65G 15/08, B65G 15/60

(54) **TURNING DEVICE FOR CONVEYOR BELT**
UMLENKSTATION FÜR FÖDERBÄNDER
DISPOSITIF DE RETOURNEMENT POUR BANDE TRANSPORTEUSE

(30) Priority: 23.06.1994 SE 9402251
(43) Date of publication of application: 02.04.1997
(73) Proprietor: SICON ROULUNDS AKTIEBOLAG, 250 24 Helsingborg (SE)
(72) Inventor: JOHANSSON, Robert, S-260 40 Viken (SE)
(74) Representative: Berglund, Gustav Arthur
(86) International application number: SE9500759
(87) International publication number: WO9600181

(56) References cited:
- WO-A-89/01451
- US-A- 2 732 058
- US-A- 3 139 970
- US-A- 4 915 213
- US-A- 5 083 658

## Description

The present invention relates to a turning device for an endless conveyor belt consisting of a flexible material and having two tensile-force-absorbing members which extend over the entire length of the conveyor belt and are each fixedly connected to a respective edge portion of the belt. The turning device comprises two deflection pulleys which are each positioned in one of two planes intersecting one another along an intersecting line.

Examples of conveyor belts which are suitable for the turning device are disclosed in US-A-4,915,213 and US-A-5,083,658, to which reference is now made. The former document describes, among other things, a conveyor belt in which the tensile-force-absorbing members project from opposite sides of the belt in the straightened state thereof. The latter document describes a conveyor belt in which the tensile-force-absorbing members project from one and the same side of the conveyor belt in the straightened state thereof. These two conveyor belts are such as to allow a closed conveyance of the goods involved.

The goods can be emptied from the conveyor belt by passing this around deflection rollers or deflection pulleys. The essential thing is that, after passing the deflection roller or the deflection pulleys, the conveyor belt is prevented from letting out spillage of the material which after emptying may still be found on the goods-carrying side of the conveyor belt.

The main object of the invention therefore is to provide a turning device of the type mentioned by way of introduction, which minimises the spillage from the endless conveyor belt after its passing the deflection pulleys and emptying the conveyed goods.

According to the invention, this object is achieved by the turning device being characterised by means for guiding the tensile-force-absorbing members in first paths substantially from the intersecting line and tangentially inwards to and in, respectively, second paths substantially towards the intersecting line and tangentially outwards from the circumference of the respective deflection pulley, means for guiding the flexible material of the conveyor belt to a bag shape facing the first paths along the second paths from the deflection pulleys towards the intersecting line and, finally, moving together the tensile-force-absorbing members into contact with each other, and means for turning the conveyor belt through at least 90° around the longitudinal direction thereof directly after moving together the tensile-force-absorbing members, while the tensile-force-absorbing members are in contact with each other during the turning.

Owing to this construction, it takes only a very short distance after passing the deflection pulleys to give the conveyor belt a closed shape.

Normally, the means for guiding the tensile-force-absorbing members in the second paths substantially towards the intersecting line and tangentially outwards from the circumference of the respective deflection pulley, said means preferably having the shape of guide rollers cooperating with the tensile-force-absorbing members, are sufficient also as means for guiding the flexible material of the conveyor belt to a bag shape facing the first paths, or a reversed U-shape along the second paths from the deflection pulleys towards the intersecting line and, finally, moving together the tensile-force-absorbing members into contact with each other. However, in a preferred embodiment, a first support roller, which makes rolling contact with a goods-carrying side of the conveyor belt, can be arranged to secure the bag shape of the conveyor belt along the second paths of the tensile-force-absorbing members.

It is also convenient that a second support roller is arranged to support the conveyor belt at a distance from the tensile-force-absorbing members during the turning of the conveyor belt through at least 90° around the longitudinal direction thereof.

Since the deflection pulleys are each arranged in one of two intersecting planes, the distance between the deflection pulleys will vary between a minimum distance and a maximum distance, the latter suitably essentially equalling the width of the conveyor belt.

The optimum geometry of the turning device is obtained when the tensile-force-absorbing members are moved together essentially into contact with each other at the points where the first paths and the second paths, respectively, intersect the intersecting line which preferably is symmetrically positioned relative to the deflection pulleys.

For optimum utilisation of the turning device as an emptying device, the shafts of the deflection pulleys should be positioned in the same plane, make an obtuse angle with each other and make an angle smaller than about 45° with the horizontal plane. In this case, a satisfactory emptying will in fact be obtained even at a very low speed of the conveyor belt.

In a preferred embodiment, the distance between the joining point of the first paths and the joining point of the second paths essentially equals the diameter of the deflection pulleys.

In the embodiment described above, a frame, in which the deflection pulleys are mounted, can be positionable in an arbitrary position along a circular arc around the intersecting line. As a result, the discharging direction of the goods leaving the conveyor belt as this moves around the deflection pulleys can be changed within a relatively great range of angles, without affecting the remaining parts of a belt conveyor in which the turning device is included.

To make a turning device of the type described above function in a satisfactory manner, it is extremely important that the deflection pulleys can be finely adjusted in the respective plane. To this end, each deflection pulley is suitably rotatably mounted on a shaft, which is adjustably mounted in the frame on an arm extending transversely of the shaft.

According to the invention, the possibility of fine adjustment is achieved for each deflection pulley by means of an angle plate having two plate members directed transversely of one another. The shaft of the deflection pulley is mounted on one plate member so as to be, on the one hand, displaceable in its longitudinal direction and, on the other hand, tiltable about a first axis extending transversely of the longitudinal direction. The other plate member is mounted on the arm so as to be, on the one hand, displaceable in the longitudinal direction of the arm and, on the other hand, tiltable about a second axis which extends transversely of the shaft of the deflection pulley as well as of the first axis.

By means of the inventive angle plate, each deflection pulley is adjustable relative to the frame with four degrees of freedom, which readily permits the desired fine adjustment of the position of the deflection pulley.

An embodiment of an inventive turning device will now be described in more detail with reference to the accompanying drawings. The embodiment uses a conveyor belt according US-A-4,915,213, but can readily be changed to use a conveyor belt according to US-A-5,083,658.

Fig. 1 is a perspective view of a turning device according to the invention.

Fig. 2 is a schematic top plan view of the turning device in Fig. 1.

Fig. 3 is a schematic side view of the turning device in Fig. 1.

Fig. 4 is a cross-sectional view of a conveyor belt in the positions indicated in Fig. 3.

Fig. 5 is an end view of an adjusting device for a deflection pulley in the turning device according to Fig. 1.

Fig. 6 is a view from below of the adjusting device in Fig. 5.

Fig. 7 is a perspective view of a preferred embodiment of an angle plate included in the adjusting device according to Figs 5 and 6.

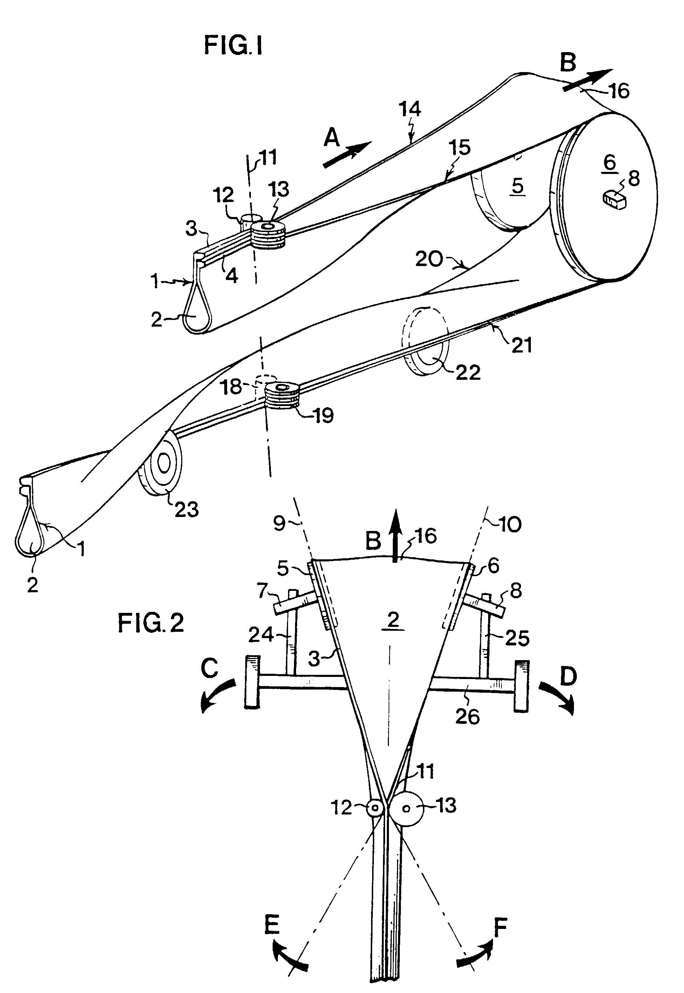

Fig. 1 illustrates a turning device according to the invention at one end of a belt conveyor (otherwise not shown) having an endless conveyor belt 1. The conveycr belt 1 consists of a web 2 of a flexible and elastic material, and two tensile-force-absorbing members 3 and 4. The members 3 and 4 are each fixedly connected to a respective edge portion of the conveyor belt 1 and project from opposite sides of the conveyor belt, i.e. in opposite directions, when the conveyor belt 1 is in its transversely straightened state. The tensile-force-absorbing members 3, 4 extend over the entire length of the conveyor belt and preferably have the profile of a V-belt, although other profiles are also conceivable. The two tensile-force-absorbing members 3, 4 are further reinforced in the longitudinal direction so as to be but little extensible when absorbing tensile forces.

The conveyor belt 1 travels in the direction of arrow A towards two deflection pulleys 5 and 6 which are included in the inventive turning device and are each rotatably mounted on a shaft 7 and 8, respectively. As shown in Fig. 2, the deflection pulleys 5, 6 are each positioned in a plane 9 and 10, respectively, which make an acute angle with one another and intersect one another along an intersecting line 11. The deflection pulley 5 has a planar circumferential surface, whereas the circumferential surface of the deflection pulley 6 comprises a groove for receiving the member 4.

The conveyor belt 1 is conducted inwards with the tensile-force-absorbing members 3, 4 directed tangentially towards the circumference of the deflection pulley 5 and 6, respectively, which is achieved by means of guide rollers 12 and 13 which move together the tensile-force-absorbing members 3, 4 essentially into contact with each other at a point substantially on the intersecting line 11. Consequently, the tensile-force-absorbing members 3, 4 follow substantially straight paths 14, 15 from the intersecting line 11 into circumferential contact with the respective deflection pulley 5, 6. In the embodiment illustrated, the tensile-force-absorbing members 3, 4 then follow the circumference of the deflection pulleys 5, 6 through an angle of about 180°.

Owing to the configuration with the deflection pulleys 5, 6 in the planes 9, 10, the central part of the conveyor belt 1 will, however, while turning around the deflection pulleys 5, 6, not follow a circular path, but form two or more, essentially stationary folds 16, 17 of the belt. As a result, goods conveyed on the conveyor belt 1 in the direction of arrow A will be thrown off from the conveyor belt 1 in the direction of arrow B with an excellent release effect relative to the goods-carrying surface of the conveyor belt 1. In consequence, only very small residues of the conveyed goods will remain on the goods-carrying surface of the conveyor belt 1 when this leaves the deflection pulleys 5, 6.

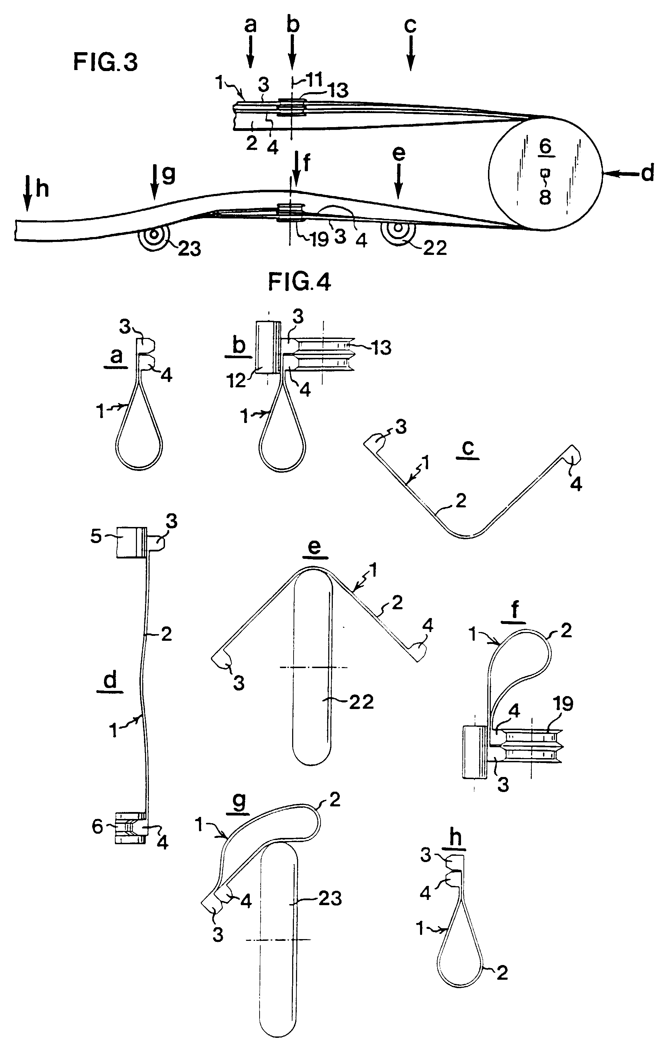

As is evident from Fig. 1 and, in more detail, from Fig. 4 a-d, which illustrates the cross-sectional shape of the conveyor belt 1 in the positions a-d in Fig. 3, the conveyor belt 1 has a closed shape, the tensileforce-absorbing members 3, 4 essentially contacting each other up to the guide rollers 12, 13, whereupon the conveyor belt 1 gradually opens to an almost planar shape in the outermost position on the deflection pulleys 5, 6, i.e. in the angular position of the deflection pulleys 5, 6, in which their mutual distance is at a maximum.

From the lower side of the deflection pulleys 5, 6, the conveyor belt 1 is conducted towards two guide rollers 18, 19, which move together the tensile-force-absorbing members 3, 4 essentially into contact with each other at a point substantially on the intersecting line 11. The tensile-force-absorbing members 3, 4 move more precisely tangentially away from the circumferences of the deflection pulleys 5, 6 in substantially straight, second paths 20, 21 in between the guide rollers 18, 19. From the deflection pulleys 5, 6 to the guide rollers 18, 19, the web 2 of the conveyor belt 1 moves upwardly towards the first paths 14, 15, such that the web 2 forms a bag shape facing the first paths 14, 15 along the second paths 20, 21. The guide rollers 18, 19 are normally sufficient to achieve this bag shape, but in order to absolutely secure the desired bag shape, a first support roller 22 can be arranged between the guide rollers 18, 19 and the deflection pulleys 5, 6, said first support roller 22 making rolling contact with the previously goods-carrying side of the conveyor belt 1, i.e. in this case, the lower side.

By closing the conveyor belt 1 in reversed bag shape directly after leaving the deflection pulleys 5, 6, a very short distance is achieved, where residues of the conveyed goods, which remain on the conveyor belt, can be spilled by falling down from the conveyor belt 1.

After passing the guide rollers 18, 19, where the conveyor belt 1 has a closed shape, it is turned around its longitudinal direction through at least 90° and preferably 180°, as illustrated in Fig. 1. After such turning, the conveyor belt can, in the remaining part of the return run, be conducted in its closed or open state, without risking further spillage, since the previously goods-carrying surface is now turned essentially upwards. To ensure clearance between the conveyor belt 1 and guide rollers (not shown) used for the turning, a second support roller 23 can be arranged to support the conveyor belt 1 at a distance from the tensile-force-absorbing members 3, 4 in one or some positions during the turning of the conveyor belt 1 around its longitudinal direction, as schematically illustrated in Fig. 1.

The shafts 7, 8 of the deflection pulleys 5, 6 are positioned in the same, preferably horizontal plane and make an obtuse angle with each other, as is evident from Fig. 2. More specifically, the shafts 7, 8 are each adjustably mounted on a transverse arm 24 and 25, respectively, of a frame 26. By the guide rollers 12, 13 as well as the guide rollers 18, 19 moving together the tensile-force-absorbing members 3, 4 essentially into contact with each other substantially at a point where the first paths 14, 15 intersect the intersecting line 11 and a point, respectively, where the second paths 20, 21 intersect the intersecting line 11, the inventive turning device can be made movable without affecting the rest of the belt conveyor. More precisely, this can be achieved by moving the frame 26 along a circular arc around the intersecting line 11, i.e. in the direction of arrow C or arrow D in Fig. 2. Correspondingly, the path of the conveyor belt 1 inwardly towards the guide rollers 12, 13 and outwardly away from the guide rollers 18, 19 can run within a relatively wide angular field, without essentially affecting the inventive turning device, as indicated by arrows E, F in Fig. 2.

The cross-sectional shape of the conveyor belt 1 on the exit side of the deflection pulleys 5, 6 is illustrated in Fig. 4 e-h for the positions e-h indicated in Fig. 3.

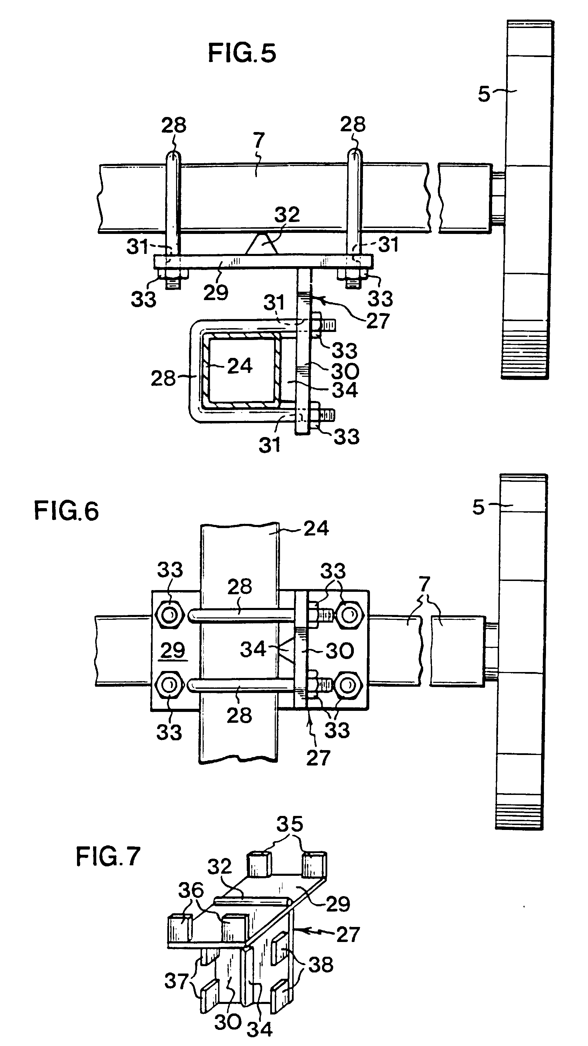

In the turning device according to the invention, the adjustment of the position of the deflection pulleys 5, 6 is very critical, and therefore a special adjusting device is provided for each deflection pulley 5, 6. This adjusting device for the deflecting pulley 5 is shown in Figs 5 and 6. More precisely, it comprises an angle plate 27 and four clamping means in the form of U-shaped yokes 28 with threaded ends. The angle plate 27 has two plate members 29, 30 which are directed transversely of one another and each have four through holes 31 for inserting the threaded ends of the yokes 28. The plate member 29 is attached to the shaft 7 by means of the yokes 28, whereby the shaft 7 abuts against a ridge 32 formed on the plate member 29 and directed transversely of the shaft. The shaft 7 and the angle plate 27 are thus tiltable relative to one another about the ridge 32 and can be set in the desired angular position by means of nuts on the free ends of the yokes 28. The arm 24 of the frame 26 is correspondingly fixable to the plate member 30, whereby this and the arm 24 are tiltable relative to one another about a ridge 34 formed on the plate member 30 and extending transversely of the longitudinal direction of the arm 24 and transversely of the longitudinal direction of the ridge 32.

By means of the adjusting device as described above, each deflection pulley 5 can be set in the desired position with four degrees of freedom.

For additional securing of the position of the shaft 7 relative to the plate member 29, the latter can be provided with two lugs 35 and two lugs 36, whose respective mutual distance essentially corresponds to the width of the shaft 7. The plate member 30 can, on both sides of the ridge 34, be provided with two lugs 37 and two lugs 38, whose mutual distance essentially corresponds to the corresponding width of the arm 24.

The man skilled in the art realises that the described embodiment of a turning device according to the invention can be modified in several respects within the scope of the appended claims.

## Claims

1. A turning device for an endless conveyor belt (1), which consists of a flexible material (2) and comprises two tensile-force-absorbing members (3, 4) which extend over the entire length of the conveyor belt and are each fixedly connected to a respective edge portion of the belt, said turning device having two deflection pulleys (5, 6) which are each positioned in one of two planes (9, 10) intersecting one another along an intersecting line (11), **characterised** by means (12, 13; 18, 19) for guiding the tensile-force-absorbing members (3, 4) in first paths (14, 15) substantially from the intersecting line (11) and tangentially inwards to and in, respectively, second paths (20, 21) substantially towards the intersecting line and tangentially outwards from the circumference of the respective deflection pulley (5, 6), means (18, 19; 22) for guiding the flexible material (2) of said conveyor belt (1) to a bag shape facing said first paths along said second paths from the deflection pulleys towards the intersecting line and, finally, moving together said tensile-force-absorbing members essentially into contact with each other, and means (18, 19; 23) for turning said conveyor belt through at least 90° around the longitudinal direction thereof directly after moving together said tensile-force-absorbing members.

2. The turning device as claimed in claim 1,
**characterised** in that the shafts (7, 8) of said deflection pulleys (5, 6) are positioned in the same plane, make an obtuse angle with each other and make an angle smaller than about 45° with the horizontal plane.

3. The turning device as claimed in claim 1 or 2,
**characterised** in that said tensile-force-absorbing members (3, 4) are moved together essentially into contact with each other substantially at the points where said first paths (14, 15) and said second (20, 21) paths, respectively, intersect said intersecting line (11).

4. The turning device as claimed in claim 3,
**characterised** in that said deflection pulleys (5, 6) are mounted in a frame (26) which is placeable in an arbitrary position along a circular arc around the intersecting line (11).

5. The turning device as claimed in claim 3 or 4,
**characterised** in that the distance between the joining point of said first paths (14, 15) and the joining point of said second paths (20, 21) essentially equals the diameter of said deflection pulleys (5, 6).

6. The turning device as claimed in claim 4,
**characterised** in that each deflection pulley (5, 6) is rotatably mounted on a shaft (7, 8) which is adjustably mounted in said frame (26) on an arm (24, 25) extending transversely of said shaft.

7. The turning device as claimed in claim 6,
**characterised** in that an angle plate (27) with two plate members (29, 30) directly transversely of one another is arranged for each deflection pulley (5), that the shaft (7) of said deflection pulley is mounted on one plate member (29) so as to be displaceable in its longitudinal direction and tiltable about a first axis transversely of the longitudinal direction, and said second plate member (30) is mounted on the arm (24) so as to be displaceable in the longitudinal direction of said arm and tiltable about a second axis which extends transversely of the shaft of said deflection pulley and of said first axis.

8. The turning device as claimed in claim 7,
**characterised** in that the shaft (7) of said deflection pulley (5) and the arm, respectively, are attached to the respective plate member (29, 30) by means of two clamping devices (28), between which said plate member comprises a ridge (32, 34) directed transversely of said shaft and said arm, respectively, such that said shaft and said arm, respectively, are tiltable on said ridge and fixable in the desired angular position by means of the clamping devices.

9. The turning device as claimed in any one of claims 1-8, **characterised** in that one deflection pulley (5) has a smooth circumferential surface, and the other deflection pulley (6) has a grooved circumferential surface for cooperation with a conveyor belt (1), whose two tensile-force-absorbing members (3, 4) project from different sides of said conveyor belt.

10. The turning device as claimed in any one of claims 1-9, **characterised** by a first support roller (22) which makes rolling contact with a goods-carrying side of said conveyor belt (1) for ensuring the bag shape of said conveyor belt along the second paths (20, 21) of said tensile-force-absorbing members (3, 4).

11. The turning device as claimed in any one of claims 1-10, **characterised** by a second support roller (23) for supporting said conveyor belt (1) at a distance from said tensile-force-absorbing members (3, 4) during the turning of said conveyor belt through at least 90° around the longitudinal direction thereof.

12. The turning device as claimed in any one of claims 1-11, **characterised** in that the greatest distance between the circumferences of said deflection pulleys (5, 6) essentially equals the width of said conveyor belt (1).

## Patentansprüche

1. Umlenkvorrichtung fur ein Endlosförderband (1), wobei das Endlosförderband aus einem flexiblen Material (2) besteht und zwei Zugkräfte absorbierende Elemente (3, 4) umfaßt, welche sich über die gesamte Länge des Förderbandes erstrecken und jeweils fest mit einem entsprechenden Kantenbereich des Förderbandes verbunden sind, und wobei die Umlenkvorrichtung zwei Umlenkscheiben (5, 6) enthält, von denen jede in einer von zwei Ebenen (9, 10) ausgerichtet ist, welche sich an einer Schnittlinie (11) überschneiden,
gekennzeichnet durch Mittel (12, 13; 18, 19) zum Führen der Zugkräfte absorbierenden Elemente (3, 4) in ersten, sich im wesentlichen von der Schnittlinie (11) weg tangential nach innen auf den Umfang der jeweiligen Umlenkscheibe (5, 6) zu erstreckenden Bahnen (14, 15) sowie in zweiten, sich vom Umfang der jeweiligen Umlenkscheibe weg tangential nach außen im wesentlichen auf die Schnittlinie zu erstreckenden Bahnen (20, 21), durch Mittel (18, 19; 22) zum Führen des flexiblen Materials (2) des Förderbandes (1) in einer Weise, daß dieses während des Transports von den Umlenkscheiben zur Schnittlinie entlang der zweiten Bahnen die Form einer den ersten Bahnen zugewandten Tasche annimmt, wobei schließlich die Zugkräfte absorbierenden Elemente soweit zusammengeschoben werden, bis diese miteinander in Kontakt stehen, sowie durch Mittel (18, 19; 23) die das Förderband direkt nach dem Zusammenschieben der Zugkräfte absorbierenden Elemente um wenigstens 90° um seine Längsrichtung drehen.

2. Umlenkvorrichtung nach Anspruch 1, dadurch gekennzeichnet, daß die Wellen (7, 8) der Umlenkscheiben (5, 6) in derselben Ebene ausgerichtet sind, miteinander einen stumpfen Winkel einschließen und zur Horizontalebene einen Winkel von weniger als etwa 45° bilden.

3. Umlenkvorrichtung nach Anspruch 1 oder 2, dadurch gekennzeichnet, daß die Zugkräfte absorbierenden Elemente (3, 4) im wesentlichen miteinander an den Punkten in Kontakt gebracht werden, an denen die ersten Bahnen (14, 15) bzw. die zweiten Bahnen (20, 21) die Schnittlinie (11) schneiden.

4. Umlenkvorrichtung nach Anspruch 3, dadurch gekennzeichnet, daß die Umlenkscheiben (5, 6) in einem Rahmen (26) angeordnet sind, der in einer beliebigen Position entlang eines um die Schnittlinie (11) verlaufenden Kreisbogens ausgerichtet werden kann.

5. Umlenkvorrichtung nach Anspruch 3 oder 4, dadurch gekennzeichnet, daß die Entfernung zwischen dem Kontaktpunkt der ersten Bahnen (14, 15) und dem Kontaktpunkt der zweiten Bahnen (20, 21) im wesentlichen dem Durchmesser der Umlenkscheiben (5, 6) entspricht.

6. Umlenkvorrichtung nach Anspruch 4, dadurch gekennzeichnet, daß jede Umlenkscheibe (5, 6) drehbeweglich an einer Welle (7, 8) befestigt ist, die ihrerseits einstellbar an einem quer zur Welle verlaufenden Ausleger (24, 25) im Rahmen (26) befestigt ist.

7. Umlenkvorrichtung nach Anspruch 6, dadurch gekennzeichnet, daß für jede Umlenkscheibe (5) eine Winkelplatte (27) mit zwei direkt quer zueinander verlaufenden Plattenelementen (29, 30) vorgesehen ist, wobei die welle (7) der Umlenkscheibe an einem Plattenelement (29) so befestigt ist, daß sie sich in ihre Längsrichtung verschieben und sich um eine erste, quer zur Längsrichtung verlaufende Achse kippen läßt, und wobei das zweite Plattenelement (30) am Ausleger (24) so befestigt ist, daß es in die Längsrichtung des Auslegers verschoben und um eine zweite Achse gekippt werden kann, welche sich quer zur Welle der Umlenkscheibe und zur ersten Achse erstreckt.

8. Umlenkvorrichtung nach Anspruch 7, dadurch gekennzeichnet, daß die Welle (7) der Umlenkscheibe (5) bzw. der Ausleger an den entsprechenden Plattenelementen (29, 30) mit Hilfe zweier Klemmvorrichtungen (28) befestigt ist, zwischen denen das Plattenelement einen Grad (32, 34) aufweist, der quer zur Welle bzw. zum Ausleger verläuft, so daß die Welle bzw. der Ausleger um den Grad gekippt und mit Hilfe der Klemmvorrichtungen in der gewünschten Winkelposition fixiert werden kann.

9. Umlenkvorrichtung nach einem der Ansprüche 1 bis 8, dadurch gekennzeichnet, daß eine Umlenkscheibe (5) eine glatte Umfangsfläche und die andere Umlenkscheibe (6) eine mit einer Nut versehene Umfangefläche aufweist, die mit einem Forderriemen (1) zusammenwirken kann, dessen beide Zugkraft absorbierende Elemente (3, 4) von verschiedenen Seiten des Förderbandes aus vorstehen.

10. Umlenkvorrichtung nach einem der Ansprüche 1 bis 9, gekennzeichnet durch eine erste Stützrolle (22), die in Rollkontakt mit einer Gutauflageseite des Förderbandes (1) kommt, um so sicherzustellen, daß das Förderband beim Transport entlang der zweiten Bahnen (20, 21) der Zugkräfte absorbierenden Elemente (3, 4) die Form einer Tasche annimmt.

11. Umlenkvorrichtung nach einem der Ansprüche 1 bis 10, gekennzeichnet durch eine zweite Stützrolle (23), welche das Förderband (1) in einer gewissen Entfernung von den Zugkräfte absorbierenden Elementen (3, 4) stützt, während es um wenigstens 90° um seine Längsrichtung gedreht wird.

12. Umlenkvorrichtung nach einem der Ansprüche 1 bis 11, dadurch gekennzeichnet, daß die größte Entfernung zwischen den Umfangsseiten der Umlenkscheiben (5, 6) im wesentlichen der Breite des Förderbandes (1) entspricht.

## Revendications

1. Dispositif de retournement pour courroie transporteuse sans fin (1), qui est formée d'un matériau flexible (2) et qui comporte deux organes (3, 4) d'absorption de forces de traction qui s'étendent sur toute la longueur de la courroie transporteuse et sont raccordés chacun à demeure à une partie respective de bord de la courroie, le dispositif de retournement ayant deux poulies (5, 6) de déviation qui sont positionnées chacune dans l'un de deux plans (9, 10) qui se recoupent le long d'une droite d'intersection (11), caractérisé par un dispositif (12, 13; 18, 19) de guidage des organes (3, 4) d'absorption des forces de traction dans des premiers trajets (14, 15) partant pratiquement de la droite d'intersection (11) et disposés tangentiellement vers l'intérieur vers des seconds trajets (20, 21) et dans ces seconds trajets pratiquement vers la droite d'intersection et tangentiellement vers l'extérieur depuis la circonférence de la poulie respective de déviation (5, 6), un dispositif (18, 19 ; 22) de guidage du matériau flexible (2) de la courroie transporteuse (1) à une forme de sac tourné vers les premiers trajets le long des seconds trajets depuis les poulies de déviation vers la droite d'intersection et, finalement, de déplacement ensemble des organes d'absorption des forces de traction pratiquement en contact mutuel, et un dispositif (18, 19 ; 23) de retournement de la courroie transporteuse de 90° au moins autour de sa direction longitudinale juste après le déplacement en coopération des organes d'absorption des forces de traction.

2. Dispositif de retournement selon la revendication 1, caractérisé en ce que les arbres (7, 8) des poulies de déviation (5, 6) sont positionnés dans le même plan et forment un angle obtus l'un avec l'autre et un angle inférieur à 45° environ avec le plan horizontal.

3. Dispositif de retournement selon la revendication 1 ou 2, caractérisé en ce que les organes (3, 4) d'absorption de forces de traction sont déplacés ensemble pratiquement en contact mutuel sensiblement aux points auxquels les premiers trajets (14, 15) et les seconds trajets (20, 21) recoupent la droite d'intersection (11) respectivement.

4. Dispositif de retournement selon la revendication 3, caractérisé en ce que les poulies de déviation (5, 6) sont montées dans un châssis (26) qui peut être placé en position arbitraire le long d'un arc de cercle autour de la droite d'intersection (11).

5. Dispositif de retournement selon la revendication 3 ou 4, caractérisé en ce que la distance comprise entre le point de raccordement des premiers trajets (14, 15) et le point de raccordement des seconds trajets (20, 21) est pratiquement égale au diamètre des poulies de déviation (5, 6).

6. Dispositif de retournement selon la revendication 4, caractérisé en ce que chaque poulie de déviation (5, 6) est montée afin qu'elle tourne sur un arbre (7, 8) qui est monté de manière réglable dans le châssis (26) sur un bras (24, 25) disposé transversalement à l'arbre.

7. Dispositif de retournement selon la revendication 6, caractérisé en ce qu'une plaque en forme de cornière (27) ayant deux organes en forme de plaque (29, 30) placés directement transversalement l'un à l'autre est disposée pour chaque poulie de déviation (5), l'arbre (7) de la poulie de déviation est monté sur un organe en forme de plaque (29) afin qu'il soit déplaçable en direction longitudinale et puisse basculer autour d'un premier axe transversal à la direction longitudinale, et le second organe en forme de plaque (30) est monté sur le bras (24) afin qu'il soit déplaçable dans la direction longitudinale du bras et qu'il puisse basculer autour d'un second axe qui s'étend transversalement à l'arbre de la poulie de deviation et au premier axe.

8. Dispositif de retournement selon la revendication 7, caractérisé en ce que l'arbre (7) de la poulie de déviation (5) et le bras respectivement sont fixés à l'organe respectif en formé de plaque (29, 30) par deux dispositifs de serrage (28) entre lesquels l'organe en forme de plaque comporte une arête (32, 34) dirigée transversalement à l'arbre et au bras respectivement afin que l'arbre et le bras respectivement puissent basculer sur l'arête et puissent être fixés en position angulaire voulue à l'aide des dispositifs de serrage.

9. Dispositif de retournement selon l'une quelconque des revendications 1 à 8, caractérisé en ce qu'une poulie de déviation (5) a une surface circonférentielle lisse, et l'autre poulie de déviation (6) a une surface circonférentielle à gorge destinée à coopérer avec une courroie transporteuse (1) dont les deux organes (3, 4) d'absorption de forces de traction dépassent de côtés différents de la courroie transporteuse.

10. Dispositif de retournement selon l'une quelconque des revendications 1 à 9, caractérisé par un premier rouleau de support (22) qui est en contact roulant avec un côté de support de marchandises de la courroie transporteuse (1) afin que la forme de sac de la courroie transporteuse soit assurée le long des seconds trajets (20, 21) des organes d'absorption de forces de traction (3, 4).

11. Dispositif de retournement selon l'une quelconque des revendications 1 à 10, caractérisé par un second rouleau de support (23) destiné à supporter la courroie transporteuse (1) à une certaine distance des organes (3, 4) d'absorption des forces de traction pendant le retournement de la courroie transporteuse d'au moins 90° autour de sa direction longitudinale.

12. Dispositif de retournement selon l'une quelconque des revendications 1 à 11, caractérisé en ce que la plus grande distance entre les circonférences des poulies de déviation (5, 6) est pratiquement égale à la largeur de la courroie transporteuses (1).
